# EUROPÄISCHE PATENTSCHRIFT

(11) **EP 3 639 112 B1**
(45) Veröffentlichungstag und Bekanntmachung des Hinweises auf die Patenterteilung: **04.08.2021**
(21) Anmeldenummer: 18731076.8
(22) Anmeldetag: 12.06.2018
(51) Int. Cl.: G06F 1/18, G06F 21/86, H05K 5/02

(54) **COMPUTERGEHÄUSE**
COMPUTER HOUSING
BOÎTIER D'ORDINATEUR

(30) Priorität: 14.06.2017 DE 102017113146
(43) Veröffentlichungstag der Anmeldung: 22.04.2020
(73) Patentinhaber: Fujitsu Client Computing Limited, Kawasaki-shi, Kanagawa 211-8588 (JP)
(72) Erfinder: NEUKAM, Wilhelm, 80807 München (DE)
(74) Vertreter: Epping - Hermann - Fischer
(86) Internationale Anmeldenummer: PCT/EP2018/065530
(87) Internationale Veröffentlichungsnummer: WO 2018/229063

(56) Entgegenhaltungen:
- DE-U1-202011 002 725
- US-A1- 2007 247 035

## Beschreibung

Die Erfindung betrifft ein Computergehäuse mit einem Gehäuserahmen und mit einer oder zwei vom Gehäuserahmen abnehmbaren Abdeckungen, wobei die eine oder die zwei Abdeckungen jeweils Teil einer äußeren Gehäusewandung sind und im montierten Zustand jeweils einen Innenbereich des Computergehäuses nach außen hin abdecken.

Computergehäuse sind vorteilhaft derart ausgeführt, dass ein einfacher und werkzeugloser Zugang zu Komponenten innerhalb des Computergehäuses, z. B. zu Verkabelungen, Erweiterungskomponenten, Festplatten oder sonstigen Speicherkomponenten, eingerichtet ist. Hierzu können eine oder mehrere Abdeckungen am Computergehäuse, die abnehmbare Teile einer äußeren Gehäusewandung sind, vom Computergehäuse bzw. von einem Gehäuserahmen abgenommen werden, sodass ein Benutzer Zugang zu einem oder mehreren dahinter liegenden Innenbereichen des Computergehäuses und damit zu den im oder in den Innenbereichen angeordneten Komponenten hat. Derartige Computergehäuse mit einer oder mehreren abnehmbaren Abdeckungen sind z.B. in den Veröffentlichungen DE 20 2011 002 725 U1 und US 2007/0247035 A1 beschrieben.

Herkömmliche Lösungen haben den Nachteil, dass die Abdeckungen entweder gegen ein unbefugtes oder versehentliches Öffnen nicht speziell abgesichert sind oder entsprechende Sicherungsmechanismen aufwendig in ihrer Konstruktion sind.

Es ist eine Aufgabe der vorliegenden Erfindung, ein Computergehäuse der eingangs genannten Art mit zumindest einer abnehmbaren Abdeckung zu beschreiben, das ein ungewolltes Öffnen der Abdeckung verhindert und dennoch einen einfachen und werkzeuglosen Zugang zu Komponenten innerhalb des Computergehäuses ermöglicht.

Diese Aufgabe wird in einem ersten Aspekt durch ein Computergehäuse gemäß Patentanspruch 1 gelöst.

Das Computergehäuse weist einen Gehäuserahmen, eine erste Abdeckung und eine zweite Abdeckung auf. Die erste und zweite Abdeckung sind vom Gehäuserahmen abnehmbare Teile einer äußeren Gehäusewandung und decken im montierten Zustand jeweils einen Innenbereich des Computergehäuses nach außen hin ab. Die erste und zweite Abdeckung weisen jeweils einen Bedienmechanismus zum Lösen einer Verrastung der ersten bzw. zweiten Abdeckung am Gehäuserahmen auf. Bei jeweils gelöster Verrastung kann somit die erste bzw. zweite Abdeckung vom Gehäuserahmen abgenommen werden.

Im montierten Zustand der ersten und zweiten Abdeckung verdeckt die erste Abdeckung den Bedienmechanismus der zweiten Abdeckung. Bei abgenommener erster Abdeckung ist der Bedienmechanismus der weiterhin montierten zweiten Abdeckung von außen bedienbar, sodass die Verrastung der zweiten Abdeckung gelöst und die zweite Abdeckung vom Gehäuserahmen abgenommen werden kann.

Bei einem derartigen Computergehäuse blockiert die erste Abdeckung eine Bedienung der zweiten Abdeckung, wenn die erste Abdeckung am Gehäuserahmen montiert ist. Dies erfolgt dadurch, dass im montierten Zustand der ersten und zweiten Abdeckung die erste Abdeckung den Bedienmechanismus der zweiten Abdeckung verdeckt. Auf diese Weise ist der Bedienmechanismus der zweiten Abdeckung nicht bedienbar, sodass die zweite Abdeckung nicht in ihrer Verrastung am Gehäuserahmen gelöst und vom Gehäuserahmen abgenommen werden kann. Auf diese Weise sichert die montierte erste Abdeckung die montierte zweite Abdeckung vor ungewolltem Öffnen. Aufgrund einer derartigen Zwangskopplung der ersten und zweiten Abdeckung bzw. des Bedienmechanismus der zweiten Abdeckung mit der ersten Abdeckung wird somit verhindert, dass die zweite Abdeckung vom Gehäuserahmen abgenommen werden kann, wenn die erste Abdeckung noch am Gehäuserahmen montiert ist. Die vorgestellte Lösung erlaubt somit eine sehr einfache Sicherung der zweiten Abdeckung vor einem ungewollten Abnehmen vom Gehäuserahmen.

In diversen Ausführungsformen kann das Computergehäuse ein Computergehäuse eines so genannten All-in-one-Computers sein, bei dem die Funktionalität des Computers innerhalb eines Display-Gehäuses bzw. Monitorgehäuses (neben dem eigentlichen Display bzw. Monitor) integriert ist. Derartige All-in-one-Computer finden immer breitere Anwendung. Bei All-in-one-Computern ist oftmals ein einfacher und werkzeugloser Zugang zu Komponenten innerhalb des Computergehäuses erforderlich, um bestimmte Komponenten auszutauschen oder das Computersystem mit bestimmten Komponenten aufzurüsten. Gerade in einem Anwendungsfall für einen All-in-one-Computer, jedoch nicht auf diesen Anwendungsfall beschränkt, ist das oben erläuterte Computergehäuse vorteilhaft.

Es ist denkbar, dass in einem von der zweiten Abdeckung abgedeckten Innenbereich im Computergehäuse speziell zu sichernde Komponenten, z. B. Festplatten oder sonstige Speicherkomponenten, aufgenommen sind. Die zweite Abdeckung deckt derartige Komponenten nach außen ab, sodass ein unmittelbarer Zugang zu diesen Komponenten nicht möglich ist, wenn die erste Abdeckung am Gehäuserahmen montiert ist. Auf diese Weise sind die Komponenten im Innenbereich, der von der zweiten Abdeckung abgedeckt wird, auf einfache Weise gegen unerlaubten oder ungewollten Zugriff gesichert.

In diversen Ausführungsformen ist die erste Abdeckung im montierten Zustand über ein Schloss am Gehäuserahmen verriegelbar, sodass die erste Abdeckung in verriegeltem Zustand nicht vom Gehäuserahmen abgenommen werden kann. Dies erlaubt eine Absperrbarkeit der ersten Abdeckung am Gehäuserahmen, sodass auch die zweite Abdeckung mittelbar abgesperrt ist, weil der Bedienmechanismus der zweiten Abdeckung, wie oben erläutert, von der ersten Abdeckung derart verdeckt ist, dass dieser nicht bedient werden kann und die zweite Abdeckung nicht vom Gehäuserahmen abgenommen werden kann. Erst wenn das Schloss an der ersten Abdeckung entriegelt ist und somit die erste Abdeckung entriegelt ist, kann diese vermittels eines Bedienens des Bedienmechanismus, d. h. konkret vermittels eines Lösens der Verrastung der ersten Abdeckung, vom Gehäuserahmen abgenommen werden. Dadurch liegt der Bedienmechanismus der zweiten Abdeckung frei und kann entsprechend bedient werden, um die zweite Abdeckung bedarfsweise ebenfalls vom Gehäuserahmen abzunehmen. Durch eine Verriegelung der ersten Abdeckung über ein Schloss ist auf diese Weise eine besonders sichere Ausgestaltung des Computergehäuses bei Absicherung sowohl der ersten als auch der zweiten Abdeckung ermöglicht. Das Schloss ist beispielsweise ein Kensington-Schloss.

In diversen Ausführungsformen ist die erste Abdeckung zum Abdecken bezüglich des Gehäuserahmens schwenkbar, während die zweite Abdeckung zum Abnehmen bezüglich des Gehäuserahmens verschiebbar ist. Durch Ausgestaltung unterschiedlicher Bewegungstrajektorien für die erste bzw. die zweite Abdeckung kann einer Manipulation zum ungewollten Öffnen der zweiten Abdeckung im Falle einer montierten ersten Abdeckung vorgebeugt werden. Selbst wenn die erste Abdeckung, beispielsweise über ein oben erläutertes Schloss, am Gehäuserahmen verriegelt ist, führt ein teilweises Erzwingen eines Öffnens der ersten Abdeckung, z. B. durch Verbiegen der ersten Abdeckung, auf diese Weise nicht ohne Weiteres zu der Möglichkeit, auch die zweite Abdeckung über eine entsprechende analoge Bewegung in eine geöffnete Position zu zwingen. Vielmehr kann durch unterschiedliche Bewegungstrajektorien für die erste und zweite Abdeckung erzielt werden, dass eine Bewegung der zweiten Abdeckung nicht möglich ist, selbst wenn eine teilweise Bewegung der ersten Abdeckung erzwungen wird, beispielsweise über eine Manipulation vermittels eines Werkzeugs.

Alternativ zur oben dargestellten Ausgestaltung ist die erste Abdeckung zum Abnehmen bezüglich des Gehäuserahmens verschiebbar, während die zweite Abdeckung zum Abnehmen bezüglich des Gehäuserahmens schwenkbar ist.

Gemäß einem zweiten Aspekt wird die obige Aufgabe durch ein Computergehäuse gemäß Patentanspruch 7 gelöst.

Das Computergehäuse weist einen Gehäuserahmen und eine vom Gehäuserahmen abnehmbare Abdeckung auf. Die Abdeckung ist Teil einer äußeren Gehäusewandung und deckt im montierten Zustand einen Innenbereich des Computergehäuses nach außen hin ab. Die Abdeckung weist einen Bedienmechanismus zum Lösen einer Verrastung der Abdeckung am Gehäuserahmen auf, wobei bei gelöster Verrastung die Abdeckung vom Gehäuserahmen abgenommen werden kann.

Ferner ist ein Sicherheitsstift eingerichtet, der den Bedienmechanismus mit einem bezüglich der Abdeckung festen Teil des Gehäuserahmens verbindet und den Bedienmechanismus so gegen eine Bedienung sperrt. Der Sicherheitsstift ist lösbar eingerichtet, wobei bei gelöstem Sicherheitsstift der Bedienmechanismus entsperrt ist.

Durch ein auf diese Weise ausgebildetes Computergehäuse kann ein ungewolltes Abnehmen der Abdeckung verhindert werden. Der Sicherheitsstift sperrt den Bedienmechanismus im montierten Zustand des Sicherheitsstifts gegen eine Bedienung, sodass eine Verrastung des Bedienmechanismus am Gehäuserahmen nicht gelöst werden kann und die Abdeckung nicht vom Gehäuserahmen abgenommen werden kann. Der Bedienmechanismus ist vielmehr nur dann bedienbar, wenn der Sicherheitsstift gelöst, z. B. abgezogen, ist. Auf diese Weise stellt der Sicherheitsstift eine zusätzliche Sicherheitsmaßnahme dar, die zunächst überwunden werden muss, um den Bedienmechanismus zum Abnehmen der Abdeckung auszulösen. Ein derartiges Computersystem ist sicher und dennoch einfach in seiner Handhabung.

In diversen Ausführungsformen taucht der Sicherheitsstift im montierten Zustand durch eine Öffnung am Bedienmechanismus hindurch in eine Öffnung am festen Teil der Gehäuserahmens und fixiert den Bedienmechanismus am festen Teil des Gehäuserahmens. Auf diese Weise stellt der Sicherheitsstift eine sichere Verbindung zwischen dem Bedienmechanismus und dem festen Teil des Gehäuserahmens her, sodass der Bedienmechanismus gegen eine Bedienung gesperrt ist. Der Sicherheitsstift kann derart geformt sein, dass er bei Einstecken in die Öffnung am festen Teil des Gehäuserahmens einen Widerstand überwindet und in eine Endposition am festen Teil des Gehäuserahmens einrastet, sodass der Sicherheitsstift in dieser Position am festen Teil des Gehäuserahmens gehalten wird. Zum Beispiel umfasst der Sicherheitsstift eine laterale Auswölbung, die nur mit einer bestimmten Druckkraft in die Öffnung am festen Teil des Gehäuserahmens eingedrückt werden kann. Alternativ umfasst der Sicherheitsstift eine laterale Einbuchtung, die mit einer entsprechenden Negativform am festen Teil des Gehäuserahmens korrespondiert und ebenfalls nur mit einer bestimmten Druckkraft in die Öffnung am festen Teil des Gehäuserahmens eingedrückt werden kann.

Es können zum Herstellen entsprechender Widerstände bzw. Druckkräfte zum sicheren Halten des Sicherheitsstifts in der Öffnung am festen Teil des Gehäuserahmens Verbindungselemente, wie Dichtungen, Dichtungsringe usw. eingesetzt werden. Alternativ oder ergänzend können der Sicherheitsstift und die Öffnung am festen Teil des Gehäuserahmens wie eine Schlüssel-Schloss-Verbindung ausgeführt sein. Dabei wird der Sicherheitsstift in einer vorbestimmten Position in die Öffnung am festen Teil des Gehäuserahmens eingebracht und beispielsweise verdreht, sodass der Sicherheitsstift in der Öffnung am festen Teil des Gehäuserahmens fixiert ist. In diesem Fall kann der Sicherheitsstift dadurch wieder vom festen Teil des Gehäuserahmens gelöst werden, dass der Sicherheitsstift in die anfängliche Ausgangsposition zurück verdreht wird. Hier sind vielerlei Ausführungsformen und Kombinationen der oben erläuterten Merkmale umfasst.

In diversen Ausführungsformen ist das Computergehäuse gemäß dem zweiten Aspekt der oben erläuterten Art als Computergehäuse gemäß dem ersten Aspekt der oben erläuterten Art ausgeführt. Dabei ist die abnehmbare Abdeckung des Computergehäuses gemäß dem zweiten Aspekt als die zweite Abdeckung des Computergehäuses gemäß dem ersten Aspekt eingerichtet. Der Sicherheitsstift ist eingerichtet, den Bedienmechanismus dieser zweiten Abdeckung entsprechend gegen eine Bedienung zu sperren. Diese Ausführungsformen stellen somit eine Kombination der beiden Computergehäuse gemäß dem ersten und zweiten Aspekt dar.

In diesen Ausführungsformen wird der Bedienmechanismus der zweiten Abdeckung somit auf zweifache Weise gesichert. Eine erste Sicherung ergibt sich, wie oben erläutert, daraus, dass im montierten Zustand die erste Abdeckung den Bedienmechanismus der zweiten Abdeckung verdeckt, sodass dieser von außen nicht bedienbar ist. Die zweite Sicherung des Bedienmechanismus der zweiten Abdeckung ergibt sich daraus, dass der Sicherheitsstift im montierten Zustand den Bedienmechanismus der zweiten Abdeckung ebenfalls gegen eine Bedienung sperrt. Auf diese Weise ist eine Bedienung des Bedienmechanismus der zweiten Abdeckung nur bei abgenommener erster Abdeckung (Freilegen des Bedienmechanismus der zweiten Abdeckung) und bei gelöstem Sicherheitsstift (Entsperren des Bedienmechanismus der zweiten Abdeckung) möglich. Somit ist auf besonders einfache, aber dennoch wirkungsvolle Weise der Bedienmechanismus der zweiten Abdeckung redundant gegen ein ungewolltes Öffnen der zweiten Abdeckung gesichert. Dennoch ist ein Abnehmen der zweiten Abdeckung einfach realisierbar, indem die erste Abdeckung abgenommen wird und der Sicherheitsstift gelöst wird.

In diversen Ausführungsformen des gemäß dem ersten und zweiten Aspekt kombinierten Computergehäuses verdeckt im montierten Zustand der ersten und zweiten Abdeckung die erste Abdeckung den Sicherheitsstift, wobei bei abgenommener erster Abdeckung der Sicherheitsstift von außen lösbar ist. Das bedeutet, dass der Sicherheitsstift nicht von außen lösbar ist, wenn die erste Abdeckung montiert ist, weil diese den Sicherheitsstift im montierten Zustand verdeckt. Durch diese Konstruktion ist der Bedienmechanismus der zweiten Abdeckung insbesondere gegen ein ungewolltes Abnehmen der zweiten Abdeckung im Falle von Manipulationen an der ersten Abdeckung bzw. am Bedienmechanismus der ersten Abdeckung gesichert. Insbesondere in einem Zustand, in dem die erste Abdeckung über ein Schloss abgesperrt bzw. am Gehäuserahmen verriegelt ist (vergleiche obige Erläuterungen), wird auf diese Weise ein manipulatives Öffnen bzw. Abnehmen der zweiten Abdeckung stark erschwert bzw. verhindert.

Selbst wenn bei abgesperrter bzw. verriegelter erster Abdeckung vermittels eines entsprechenden Werkzeugs (z. B. Flachstahl oder Schraubenzieher) ein kleiner Spalt zwischen der ersten Abdeckung und dem Gehäuserahmen eröffnet werden kann (z. B. aufgrund einer Flexibilität eines Kunststoffmaterials der ersten Abdeckung), sodass ein Betätigen des Bedienmechanismus der zweiten Abdeckung (ebenfalls vermittels eines Werkzeugs wie eines flexiblen Flachstahls oder Ähnlichem) möglich wäre, verhindert dennoch der Sicherheitsstift eine entsprechende Betätigung des Bedienmechanismus der weiterhin montierten zweiten Abdeckung von außen, weil der Sicherheitsstift weiterhin derart von der ersten Abdeckung (trotz Manipulationen) verdeckt bleibt, dass der Sicherheitsstift nicht gelöst werden kann. Vorteilhaft ist das Computergehäuse derart konstruiert, dass der Sicherheitsstift erst bei vollständig geöffneter bzw. abgenommener erster Abdeckung entfernt werden kann. Auf diese Weise werden die genannten Manipulationsmöglichkeiten weiter erschwert.

Weitere vorteilhafte Aspekte und Ausgestaltungen sind in den entsprechenden Unteransprüchen offenbart.

Die Erfindung wird anhand von Ausführungsbeispielen unter Heranziehung mehrerer Zeichnungen im Folgenden näher erläutert.

Es zeigen:
- Figur 1: eine perspektivische Darstellung eines Computergehäuses in einem ersten Zustand,
- Figur 2: das Computergehäuse gemäß Figur 1 in einem zweiten Zustand,
- Figur 3: das Computergehäuse gemäß den Figuren 1 und 2 in einem dritten Zustand,
- Figur 4: eine weitere Ausführungsform des Computergehäuses in einem ersten Zustand und
- Figur 5: das Computergehäuse gemäß Figur 4 in einem zweiten Zustand.

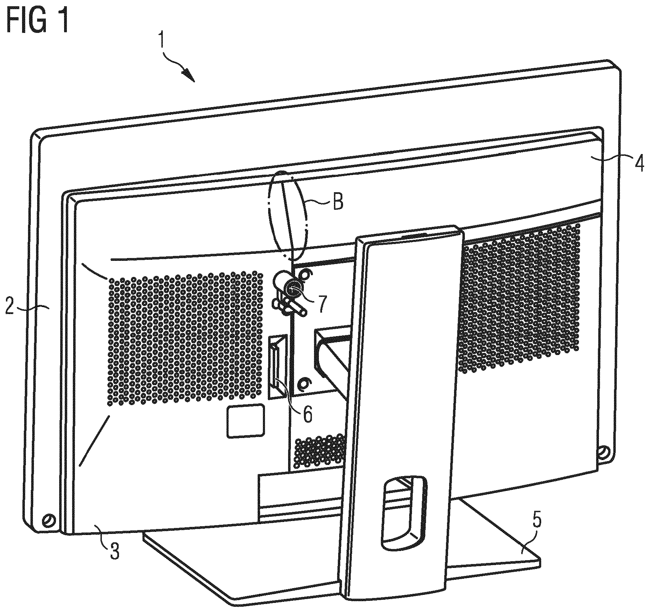

Figur 1 zeigt ein Computergehäuse 1, das in dieser Ausführungsform als Computergehäuse eines All-in-one-Computers ausgeführt ist. Das bedeutet, dass das Computergehäuse 1 als Gehäuse eines Bildschirms bzw. Monitors mit einem Standfuß 5 ausgeführt ist und neben einer Anzeigeeinheit des Bildschirms bzw. Monitors bestimmungsgemäße Komponenten eines Computers in dem Computergehäuse 1 integriert sind. Auf diese Weise stellt das System einen Computer bereit, der unmittelbar im Gehäuse des Monitors bzw. Bildschirms integriert ist. In alternativen Ausführungsformen kann das Computergehäuse 1 jedoch z. B. auch als Desktop-Computergehäuse oder als Server-Gehäuse oder dergleichen eingerichtet sein.

Das Computergehäuse 1 gemäß Figur 1 weist einen Gehäuserahmen 2 sowie eine erste Abdeckung 3 und eine zweite Abdeckung 4 auf. Die erste und zweite Abdeckung 3, 4 können vom Gehäuserahmen 2 abgenommen werden und verdecken jeweils einen Innenbereich des Computergehäuses 1, in den Komponenten des Computergehäuses aufgenommen sind. Zum Beispiel verdeckt die erste Abdeckung 3 einen Innenbereich zum Aufnehmen von Kabeln, Kabelanschlüssen oder Steckern, während die zweite Abdeckung 4 einen Innenbereich zum Aufnehmen von Speicherkomponenten wie Festplatten, Speicherlaufwerken oder sonstigen Speicherkomponenten abdeckt. Dies wird in den nachfolgenden Figuren näher veranschaulicht.

Die erste Abdeckung 3 ist gemäß Figur 1 über einen Bedienmechanismus 6 bedienbar. Durch Betätigen des Bedienmechanismus 6 kann eine Verrastung der ersten Abdeckung 3 am Gehäuserahmen 2 gelöst werden, sodass die erste Abdeckung 3 vom Gehäuserahmen 2 abgenommen werden kann. Beispielsweise ist der Bedienmechanismus 6 ein Handgriff oder Hebel, der von einem Benutzer betätigt werden kann. Der Bedienmechanismus 6 kann beispielsweise gefedert ausgeführt sein, sodass die erste Abdeckung 3 im gemäß Figur 1 dargestellten geschlossenen bzw. montierten Zustand in eine stabile Endposition einrastet. Bei Betätigen des Bedienmechanismus 6 entgegen einer Federkraft kann diese Verrastung gelöst werden, sodass die erste Abdeckung 3 bewegt werden kann. In der Ausführungsform gemäß Figur 1 ist die erste Abdeckung 3 schwenkbar bezüglich des Gehäuserahmens 2.

Die erste Abdeckung 3 ist über ein Schloss 7 am Gehäuserahmen 2 verriegelbar bzw. absperrbar. In der Ausführungsform gemäß Figur 1 ist das Schloss 7 ein Kensington-Schloss. Vermittels des Schlosses 7 kann die erste Abdeckung 3 somit derart abgesperrt werden, dass selbst bei Bedienen des Bedienmechanismus 6 die erste Abdeckung 3 nicht oder nur unwesentlich aus ihrer Verrastung am Gehäuserahmen 2 bewegt werden kann. Auf jeden Fall ist ein Abnehmen bzw. gänzliches Öffnen der ersten Abdeckung 3 durch das Schloss 7 im abgesperrten Zustand verhindert.

Das Computergehäuse 1 gemäß Figur 1 ist weiterhin derart konstruiert, dass die erste Abdeckung 3 einen weiteren Bedienmechanismus (nicht dargestellt) der zweiten Abdeckung 4 in einem Bereich B überdeckt bzw. verdeckt. Auf diese Weise ist die zweite Abdeckung 4 im Zustand gemäß Figur 1 nicht bedienbar, weil die erste Abdeckung 3 eine entsprechende Bedienung durch Verdecken des Bedienmechanismus der zweiten Abdeckung 4 im Bereich B verhindert. Auf diese Weise wird verhindert, dass die zweite Abdeckung 4 aus ihrer Verrastung am Gehäuserahmen 2 gelöst und vom Gehäuserahmen 2 abgenommen werden kann, wenn die erste Abdeckung 3 im Zustand gemäß Figur 1 ist. Somit sichert ein Computergehäuse 1 gemäß Figur 1 die zweite Abdeckung 4 gegen ein ungewolltes Abnehmen vom Gehäuserahmen 2 bei weiterhin montierter erster Abdeckung 3. Dies ist beispielsweise sinnvoll, wenn die zweite Abdeckung 4 sicherheitskritische Komponenten, wie z. B. Speicherkomponenten, verdeckt, wobei durch die konstruktiven Ausführungen der erläuterten Art ein Öffnen der zweiten Abdeckung 4 bei geschlossener erster Abdeckung 3 verhindert ist, sodass ein Zugriff auf die sicherheitskritischen Komponenten von außen verhindert ist. Auf diese Weise kann z. B. verhindert werden, dass ein unbefugter Benutzer bei über das Schloss 7 abgeschlossener bzw. verriegelter erster Abdeckung 3 dennoch die zweite Abdeckung 4 abnimmt und sich Zugriff auf die sicherheitskritischen Komponenten verschafft. Durch eine Zwangskopplung der ersten und zweiten Abdeckungen 3 und 4 ist auf diese Weise ein einfacher und dennoch wirkungsvoller Mechanismus geschaffen zur Sicherung der zweiten Abdeckung 4.

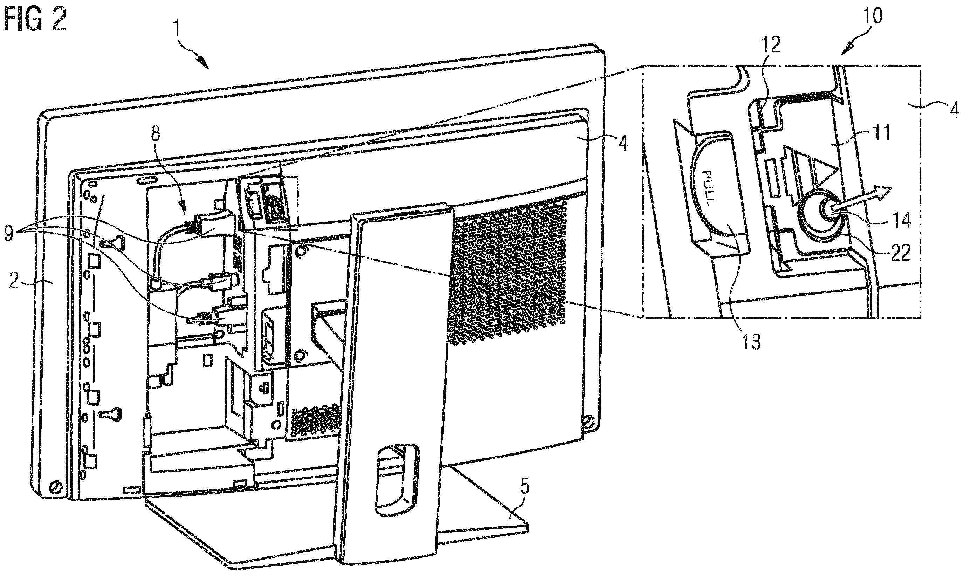

Figur 2 zeigt das Computergehäuse 1 gemäß Figur 1 in einem zweiten Zustand. In diesem Zustand ist die erste Abdeckung 3 gemäß Figur 1 abgenommen. Figur 2 stellt einen Innenbereich 8 dar, der gemäß Figur 1 durch die erste Abdeckung 3 abgedeckt war. Im Innenbereich 8 sind diverse Kabelanschlüsse bzw. Stecker 9 einer Verkabelung innerhalb des Computergehäuses 1 eingerichtet. Diese Kabelanschlüsse bzw. Stecker 9 dienen zur Verkabelung von Komponenten des All-in-one-Computers der oben erläuterten Art.

Aufgrund der abgenommenen ersten Abdeckung 3 ist gemäß Figur 2 der weitere Bedienmechanismus 10 der zweiten Abdeckung 4 sichtbar. Dieser Bedienmechanismus 10 ist in einem vergrößerten Ausschnitt auf der rechten Seite der Figur 2 nochmals im Detail veranschaulicht. Der Bedienmechanismus 10 umfasst eine gefederte Lasche 11, die an einem Hebel 13 von einem Benutzer bedienbar ist. Die gefederte Lasche 11 verrastet im in Figur 2 dargestellten montierten Zustand der zweiten Abdeckung 4 an einem Rastmittel 12, das in der Ausführungsform gemäß Figur 2 als Kante zur Hintergreifung einer Gegenkante der gefederten Lasche 11 ausgeführt ist. Das bedeutet, dass im gemäß Figur 2 dargestellten Zustand der zweiten Abdeckung 4 die gefederte Lasche 11 hinter die Kante bzw. das Rastmittel 12 einschnappt und die zweite Abdeckung 4 in der dargestellten Position festhält. Ein Bewegen der zweiten Abdeckung 4 ist in diesem Zustand nicht möglich. Beispielsweise ist die zweite Abdeckung 4 derart eingerichtet, dass sie bei gelöster Verrastung der gefederten Lasche 11 vom Rastmittel 12 gemäß Figur 2 nach rechts bezüglich des Gehäuserahmens 2 verschiebbar ist. Eine derartige Bewegung wird durch das Zusammenspiel der gefederten Lasche 11 mit dem Rastmittel 12 im gemäß Figur 2 dargestellten Zustand verhindert. Durch Betätigen des Hebels 13 kann die rastende Verbindung zwischen den Komponenten 11 und 12 aufgehoben werden (beispielsweise durch Ziehen am Hebel 13 in eine Richtung aus der Zeichenebene gemäß Figur 2 heraus). In diesem Fall kann ein Benutzer die zweite Abdeckung 4 dann nach rechts gemäß Figur 2 bezüglich des Gehäuserahmens 2 verschieben und die zweite Abdeckung 4 vom Gehäuserahmen 2 abnehmen.

In der in Figur 2 dargestellten Konstruktion des Computergehäuses 1 wird ein Betätigen des Bedienmechanismus 10 zusätzlich über einen Sicherheitsstift bzw. Pin 14 abgesichert. Im in Figur 2 dargestellten Zustand (vergleiche insbesondere den vergrößert dargestellten Ausschnitt) sitzt der Pin 14 derart, dass er durch eine Öffnung 22 an der gefederten Lasche 11 hindurch in eine Öffnung (nicht dargestellt) am festen Teil des Gehäuserahmens 2 eintaucht. Auf diese Weise blockiert der Pin 14 ein Betätigen des Bedienmechanismus 10 über den Hebel 13. Zur Betätigung des Bedienmechanismus 10 muss zunächst der Pin 14 in Pfeilrichtung herausgezogen werden, um die Sperre des Bedienmechanismus mit dem bezüglich der zweiten Abdeckung 4 festen Teil des Gehäuserahmens 2 zu lösen. Auf diese Weise ist der Bedienmechanismus 10 vermittels des Pins 14 gegen ein ungewolltes Betätigen zusätzlich abgesichert, neben der Tatsache, dass der Bedienmechanismus 10 im montierten Zustand der ersten Abdeckung 3 gemäß Figur 1 verdeckt und nicht zugänglich ist. In einem derartigen Zustand ist im Übrigen auch der Pin 14 verdeckt (vergleiche Zustände gemäß Figur 1 und 2), sodass auch der Pin 14 im montierten Zustand der ersten Abdeckung 3 nicht aus seiner Verrastung mit dem Bedienmechanismus 10 bzw. dem Gehäuserahmen 2 gelöst werden kann.

Somit verhindert der Pin 14 ein Betätigen des Bedienmechanismus 10 vermittels des Hebels 13, selbst wenn bei montierter erste Abdeckung 3 gemäß Figur 1 über ein Werkzeug an der ersten Abdeckung 3 manipuliert wird. Selbst bei einer abgesperrten ersten Abdeckung 3 vermittels des Schlosses 7 gemäß Figur 1 könnte unter Umständen ein kleiner Spalt zwischen der ersten Abdeckung 3 und dem Gehäuserahmen 2 (z.B. in der Nähe des Bedienmechanismus 6 der ersten Abdeckung 3) geöffnet werden. Beispielsweise könnte ein unbefugter Benutzer mit einem entsprechenden Werkzeug (Flachstahl, Schraubenzieher oder Ähnliches) die erste Abdeckung 3 trotz Verriegelung über das Schloss 7 aufbiegen, um an den Bedienmechanismus 10 der zweiten Abdeckung 4 zu gelangen und diesen zum Abnehmen der zweiten Abdeckung 4 zu betätigen. In diesem Fall blockiert jedoch der Pin 14 weiterhin eine Betätigung des Bedienmechanismus 10, wobei der Pin 14 derart positioniert ist, dass selbst bei einem Aufbiegen der ersten Abdeckung 3 der Pin 14 nicht von außen aus dem gemäß Figur 2 dargestellten Zustand gelöst werden kann. Somit stellt die Konstruktion des Computergehäuses 1 gemäß den Figuren 1 und 2 eine mehrstufige Sicherung der zweiten Abdeckung 4 gegen ein ungewolltes Abnehmen selbst bei Manipulationen an einer abgesperrten und verriegelten ersten Abdeckung 3 dar.

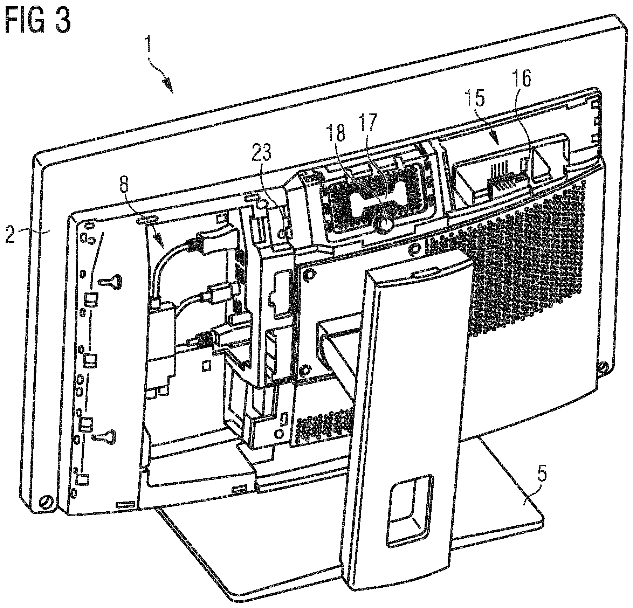

Figur 3 zeigt das Computergehäuse 1 in einem dritten Zustand, in dem sowohl die erste Abdeckung 3 als auch die zweite Abdeckung 4 vom Gehäuserahmen 2 abgenommen sind. Ein Abnehmen der zweiten Abdeckung 4 erfolgte durch Entfernen des Pins 14 sowie durch Lösen der gefederten Lasche 11 vermittels des Hebels 13 vom Rastmittel 12, wie zu Figur 2 oben erläutert worden ist.

In Figur 3 sind nun beide Abdeckungen 3 und 4 abgenommen, wobei beide Innenbereiche 8 und 15 nach außen offengelegt sind. Der Innenbereich 15 zeigt gemäß Figur 3 eine Aufnahme 16, die nach außen offen und zugänglich ist. Die Aufnahme 16 ist beispielsweise zur Aufnahme von Festplatten oder sonstigen Laufwerken eingerichtet. Neben der Aufnahme 16 umfasst der Innenbereich 15 noch einen weiteren Bereich mit einem Abschirmblech 17, das zur Abschirmung von dahinter liegenden Komponenten eingerichtet ist. Die hinter dem Abschirmblech 17 liegenden Komponenten können beispielsweise Speicherkomponenten, wie z. B. Flash-Speicher, umfassen. Für einen Zugang zu diesen Komponenten kann ein lösbares Befestigungsmittel 18 am Abschirmblech 17 entfernt werden, sodass das Abschirmblech 17 abgenommen werden kann. Das Befestigungsmittel 18 ist beispielsweise eine RändelSchraube. Neben einem zusätzlichen Schutz gegen einen unmittelbaren Zugriff auf dahinterliegende Komponente dient das Abschirmblech 17 zur elektrostatischen bzw. elektromagnetischen Abschirmung der dahinterliegenden Komponenten. Auf diese Weise kann eine sehr gute elektromagnetische Verträglichkeit (EMV) des Systems erreicht werden.

Wie in Figur 3 ersichtlich ist, liegt eine Öffnung 23 am festen Teil des Gehäuserahmens 2 im Bereich einer Aufnahme des Bedienmechanismus 10 gemäß Figur 2 frei, nachdem der Pin 14 (vgl. Figur 2) aus dieser Öffnung 23 entfernt worden ist. In dem gemäß Figur 3 dargestellten Zustand des Computergehäuses 1 ist somit sowohl ein Zugriff auf Komponenten im Innenbereich 8 als auch auf Komponenten im Innenbereich 15 des Computergehäuses 1 ermöglicht, nachdem beide Abdeckungen 3 und 4 entfernt sind. Beispielsweise kann ein Benutzer Kabelanschlüsse oder Stecker 9 im Innenbereich 8 konfigurieren, z. B. umstecken, und/oder das System mit Komponenten im Innenbereich 15 aufrüsten oder Komponenten im Innenbereich 15 auswechseln.

Zum erneuten Verschließen des Computergehäuses 1, z. B. nach Durchführung entsprechender Arbeiten, wird zunächst die zweite Abdeckung 4 von der rechten Seite gemäß Figur 3 her auf den Gehäuserahmen 2 aufgeschoben, bis die gefederte Lasche 11 gemäß Figur 2 das Rastmittel 12 hintergreift und in den gemäß Figur 2 dargestellten Zustand einrastet. Anschließend wird der Pin 14 gemäß Figur 2 wieder durch die Öffnung 22 in der gefederten Lasche 11 hindurch in die Öffnung 23 (vergleiche Figur 3) eingesteckt, wodurch der Bedienmechanismus 10 gemäß Figur 2 wieder verriegelt ist. Anschließend wird die erste Abdeckung 3 wieder an den Gehäuserahmen 2 angesetzt und in den in Figur 1 dargestellten Zustand zurückgeschwenkt, sodass der Bedienmechanismus 6 gemäß Figur 1 die erste Abdeckung 3 am Gehäuserahmen 2 verrastet. In diesem Zustand gemäß Figur 1 ist somit der Bedienmechanismus 10 der zweiten Abdeckung 4 sowie der Pin 14 erneut im Bereich B durch die erste Abdeckung 3 verdeckt, sodass eine Betätigung der zweiten Abdeckung 4 bzw. ein Entfernen des Pins 14 nicht möglich sind. Die erste Abdeckung 3 kann dann wiederum durch das Schloss 7 verschlossen werden, sodass die gesamte Gehäusewandung des Computergehäuses 1 redundant gegen einen ungewollten Zugriff von außen abgesichert ist.

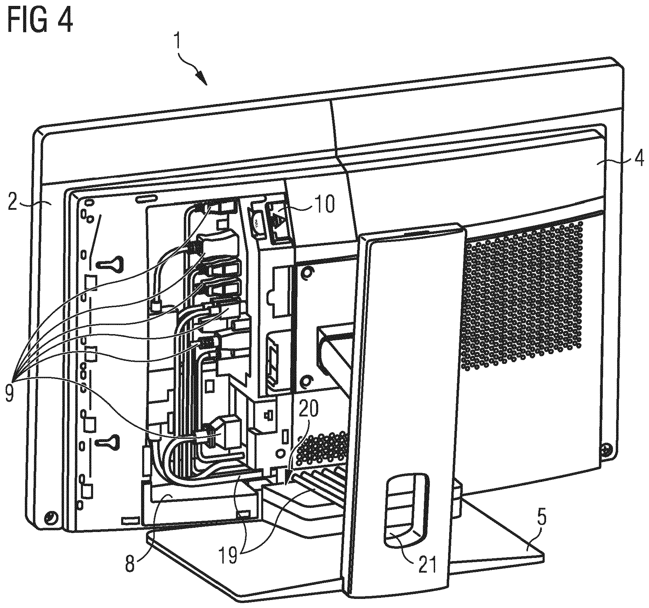

Figur 4 zeigt eine weitere Ausführungsform des Computergehäuses 1, wobei die erste Abdeckung 3 bereits abgenommen ist, jedoch die zweite Abdeckung 4 am Gehäuserahmen 2 verbleibt. Die Ausführungsform gemäß Figur 4 unterscheidet sich von der Ausführungsform gemäß den Figuren 1 bis 3 dadurch, dass eine Sicherung des Bedienmechanismus 10 der zweiten Abdeckung 4 vermittels eines Pins 14 (vergleiche Figur 2) entfällt. Eine Sicherung der zweiten Abdeckung 4 ergibt sich in der Ausführungsform gemäß Figur 4 rein dadurch, dass eine montierte erste Abdeckung 3 (nicht dargestellt) im montierten Zustand den Bedienmechanismus 10 der zweiten Abdeckung 4 verdeckt, wie es in Figur 1 dargestellt und oben erläutert worden ist.

Die Ausführungsform gemäß Figur 4 veranschaulicht eine Kabelführung der Kabelanschlüsse bzw. Stecker 9 im Innenbereich 8 des Computergehäuses 1. Hierbei sind Kabel 19 von Kabelanschlüssen bzw. Steckern 9 weggeführt und werden von den seitlich an einem zentral angeordneten Systemboard angesteckten Kabelanschlüssen bzw. Steckern 9 nach unten in Richtung des Standfußes 5 und von dort in Richtung eines zentralen Kabelkanals 20 mit einer Öffnung nach außen geführt. Auf diese Weise können die Kabel 19 aus dem Innenbereich 8 über den Kabelkanal 20 nach außen geführt werden. Eine zusätzliche Öffnung 21 in Standfuß 5 erlaubt das Durchführen der Kabel 19 durch den Standfuß 5 in Richtung einer Rückseite des Computergehäuses 1. Die Kabel 19 können beispielsweise Kabel von Peripheriegeräten sein, die im Innenbereich 8 vermittels der Kabelanschlüsse bzw. Stecker 9 mit Systemkomponenten innerhalb des Computergehäuses 1 verbunden sind. Auf diese Weise ergibt sich neben den erläuterten Aspekten eines sicheren Verschließens der beiden Abdeckungen 3 und 4 auch ein intelligentes Kabelführungskonzept innerhalb des Computergehäuses 1. Die Einrichtung von seitlichen an einem zentralen Systemboard angeordneten Kabelanschlüssen bzw. Steckern 9 innerhalb des Computergehäuses 1 bietet zudem den Vorteil, dass bei eröffnetem Innenbereich 8 die Kabelanschlüsse bzw. Stecker 9 und deren Kabel 19 auf einfache Weise zugänglich und gehandhabt werden können. So können die Kabelanschlüsse bzw. Stecker 9 auf einfache Weise gesteckt bzw. abgezogen werden und die Kabel 19 verlegt werden, ohne dass der Standfuß 5 und dessen Träger zur Halterung des Monitors bzw. des Systems hierfür hinderlich wären. Auch dies bietet gegenüber herkömmlichen All-in-one-Computern bzw. Monitoren, bei denen Kabelanschlüsse nach unten zum Standfuß 5 hin bzw. zu einer Rückseite hin angeordnet sind, den Vorteil eines verbesserten Handlings, weil für Kabelanschlüsse bzw. Stecker 9 der Standfuß 5 nicht hinderlich ist bzw. nicht demontiert werden muss, um die entsprechenden Anschlüsse vornehmen zu können.

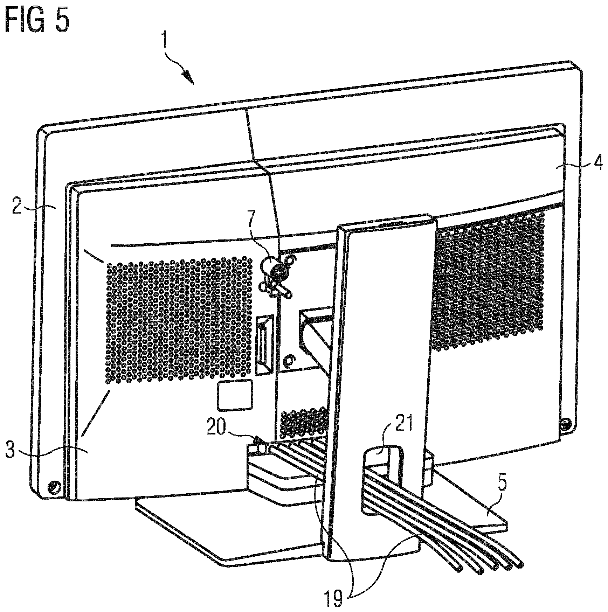

Figur 5 zeigt schließlich die Anordnung gemäß Figur 4 bei geschlossener erster Abdeckung 3, die wiederum über ein Schloss 7 verschlossen ist. Die Kabel 19 sind über den Kabelkanal 20 nach außerhalb des Computergehäuses 1 geführt und treten durch die Öffnung 21 im Standfuß 5 hindurch. Auf diese Weise ergibt sich ein einfaches Kabelmanagement am Computergehäuse 1.

Die dargestellten Ausführungsformen sind lediglich beispielhaft gewählt. Die erläuterten Computergehäuse 1 erlauben eine einfache, aber dennoch wirkungsvolle Absicherung einer Abdeckung 4 am Computergehäuse 1 gegen einen ungewollten bzw. unerlaubten Zugriff auf hinter der Abdeckung 4 in einem Innenbereich 15 angeordnete Komponenten. Die Abdeckung 4 wird dabei durch eine weitere Abdeckung 3 bzw. durch einen Pin 14 dadurch abgesichert, dass deren Bedienmechanismus 10 durch die Abdeckung 3 in deren montiertem Zustand verdeckt ist bzw. über den Pin 14 dessen Betätigung gesperrt wird. Zum Abnehmen der Abdeckung 4 muss lediglich die weitere Abdeckung 3 abgenommen werden bzw. der Pin 14 gezogen werden, sodass der Bedienmechanismus 10 der Abdeckung 4 betätigt und die Abdeckung 4 vom Gehäuserahmen 2 abgenommen werden kann.

In weiteren Ausführungsformen eines Computergehäuses 1 ist lediglich eine Abdeckung 4 vorgesehen, die über einen Pin 14 gemäß den obigen Erläuterungen verriegelbar ist. In diesem Fall kann eine zweite Abdeckung 3 zur zusätzlichen Absicherung der Abdeckung 4 (Verdecken eines Bedienmechanismus 10 der Abdeckung 4) entfallen.

### Bezugszeichenliste

- 1: Computergehäuse
- 2: Gehäuserahmen
- 3: erste Abdeckung
- 4: zweite Abdeckung
- 5: Standfuß
- 6: Bedienmechanismus der ersten Abdeckung
- 7: Schloss
- 8: Innenbereich
- 9: Kabelanschlüsse/Stecker
- 10: Bedienmechanismus der zweiten Abdeckung
- 11: gefederte Lasche
- 12: Rastmittel
- 13: Hebel
- 14: Sicherheitsstift
- 15: Innenbereich
- 16: Aufnahme
- 17: Abschirmblech
- 18: Befestigungsmittel
- 19: Kabel
- 20: Kabelkanal mit Öffnung
- 21: Öffnung im Standfuß
- 22: Öffnung im Bedienmechanismus
- 23: Öffnung im festen Teil des Gehäuserahmens
- B: Bereich der Überdeckung

## Patentansprüche

1. Computergehäuse (1) mit einem Gehäuserahmen (2), mit einer ersten Abdeckung (3) und mit einer zweiten Abdeckung (4), wobei die erste und zweite Abdeckung (3, 4) vom Gehäuserahmen (2) abnehmbare Teile einer äußeren Gehäusewandung sind und im montierten Zustand jeweils einen Innenbereich (8, 15) des Computergehäuses (1) nach außen hin abdecken,
wobei die erste und zweite Abdeckung (3, 4) jeweils einen Bedienmechanismus (6, 10) zum Lösen einer Verrastung der ersten bzw. zweiten Abdeckung (3, 4) am Gehäuserahmen (2) aufweisen und bei jeweils gelöster Verrastung die erste bzw. zweite Abdeckung (3, 4) vom Gehäuserahmen (2) abgenommen werden kann,
**dadurch gekennzeichnet, dass**
im montierten Zustand der ersten und zweiten Abdeckung (3, 4) die erste Abdeckung (3) den Bedienmechanismus (10) der zweiten Abdeckung (4) verdeckt,
wobei bei abgenommener erster Abdeckung (3) der Bedienmechanismus (10) der weiterhin montierten zweiten Abdeckung (4) von außen bedienbar ist, sodass die Verrastung der zweiten Abdeckung (4) gelöst und die zweite Abdeckung (4) vom Gehäuserahmen (2) abgenommen werden kann.

2. Computergehäuse (1) nach Anspruch 1, wobei die erste Abdeckung (3) im montierten Zustand über ein Schloss (7) am Gehäuserahmen (2) verriegelbar ist, sodass die erste Abdeckung (3) im verriegelten Zustand nicht vom Gehäuserahmen (2) abgenommen werden kann.

3. Computergehäuse (1) nach Anspruch 1 oder 2, wobei die erste Abdeckung (3) zum Abnehmen bezüglich des Gehäuserahmens (2) schwenkbar ist, während die zweite Abdeckung (4) zum Abnehmen bezüglich des Gehäuserahmens (2) verschiebbar ist.

4. Computergehäuse (1) nach einem der Ansprüche 1 bis 3, wobei der Bedienmechanismus (10) der zweiten Abdeckung (4) eine gefederte Lasche (11) und ein Rastmittel (12) umfasst, wobei die gefederte Lasche (11) im montierten Zustand der zweiten Abdeckung (4) am Rastmittel (12) verrastet und durch Betätigen der gefederten Lasche (11) entgegen einer Federkraft die Verrastung der gefederten Lasche (11) am Rastmittel (12) gelöst werden kann.

5. Computergehäuse (1) nach einem der Ansprüche 1 bis 4, wobei der von der zweiten Abdeckung (4) abgedeckte Innenbereich (15) ein Abschirmblech (17) aufweist zum Abschirmen von im Innenbereich (15) aufgenommenen Komponenten nach außen.

6. Computergehäuse (1) nach Anspruch 5, wobei das Abschirmblech (17) vermittels eines lösbaren Befestigungsmittels (18) am Gehäuserahmen (2) festgelegt ist, wobei bei abgenommener zweiter Abdeckung (4) durch Lösen des Befestigungsmittels (18) das Abschirmblech (17) vom Gehäuserahmen (2) abgenommen werden kann.

7. Computergehäuse (1) mit einem Gehäuserahmen (2) und mit einer vom Gehäuserahmen (2) abnehmbaren Abdeckung (4), wobei die Abdeckung (4) Teil einer äußeren Gehäusewandung ist und im montierten Zustand einen Innenbereich (15) des Computergehäuses (1) nach außen hin abdeckt,
wobei die Abdeckung (4) einen Bedienmechanismus (10) zum Lösen einer Verrastung der Abdeckung (4) am Gehäuserahmen (2) aufweist und bei gelöster Verrastung die Abdeckung (4) vom Gehäuserahmen (2) abgenommen werden kann,
**dadurch gekennzeichnet, dass**
ein Sicherheitsstift (14) eingerichtet ist, der den Bedienmechanismus (10) mit einem bezüglich der Abdeckung (4) festen Teil des Gehäuserahmens (2) verbindet und den Bedienmechanismus (10) so gegen eine Bedienung sperrt,
wobei der Sicherheitsstift (14) lösbar eingerichtet ist und bei gelöstem Sicherheitsstift (14) der Bedienmechanismus (10) entsperrt ist.

8. Computergehäuse (1) nach Anspruch 7, wobei der Sicherheitsstift (14) im montierten Zustand durch eine Öffnung (22) am Bedienmechanismus (10) hindurch in eine Öffnung (23) am festen Teil des Gehäuserahmens (2) taucht und den Bedienmechanismus (10) am festen Teil des Gehäuserahmens (2) fixiert.

9. Computergehäuse (1) nach Anspruch 7 oder 8, das als Computergehäuse (1) nach einem der Ansprüche 1 bis 6 ausgeführt ist, wobei die abnehmbare Abdeckung (4) als die zweite Abdeckung (4) eingerichtet ist und der Sicherheitsstift (14) eingerichtet ist den Bedienmechanismus (10) der zweiten Abdeckung (4) entsprechend gegen eine Bedienung zu sperren.

10. Computergehäuse (1) nach Anspruch 9, wobei im montierten Zustand der ersten und zweiten Abdeckung (3, 4) die erste Abdeckung (3) den Sicherheitsstift (14) verdeckt und
wobei bei abgenommener erster Abdeckung (3) der Sicherheitsstift (14) von außen lösbar ist.

## Claims

1. Computer housing (1) with a housing frame (2), with a first cover (3) and with a second cover (4), wherein the first and second covers (3, 4) are parts of an outer housing wall which are removable from the housing frame (2) and, in the assembled state, each cover an inner region (8, 15) of the computer housing (1) towards the outside,
wherein the first and second covers (3, 4) each have an operating mechanism (6, 10) for releasing a latch of the first and second covers (3, 4) respectively on the housing frame (2) and when the latch is released in each case the first and second covers (3, 4) respectively can be removed from the housing frame (2),
**characterised in that**
in the mounted state of the first and second cover (3, 4), the first cover (3) covers the operating mechanism (10) of the second cover (4),
wherein, when the first cover (3) is removed, the operating mechanism (10) of the second cover (4), which is still mounted, can be operated from the outside, so that the latch of the second cover (4) can be released and the second cover (4) can be removed from the housing frame (2).

2. Computer housing (1) according to claim 1, wherein the first cover (3) in the mounted state can be locked to the housing frame (2) via a lock (7), so that the first cover (3) cannot be removed from the housing frame (2) in the locked state.

3. Computer housing (1) according to claim 1 or 2, wherein the first cover (3) is pivotable for removal with respect to the housing frame (2), while the second cover (4) is slidable for removal with respect to the housing frame (2).

4. Computer housing (1) according to any one of claims 1 to 3, wherein the operating mechanism (10) of the second cover (4) comprises a spring-loaded tab (11) and a latching means (12), wherein the spring-loaded tab (11) latches on the latching means (12) in the mounted state of the second cover (4) and the latching of the spring-loaded tab (11) on the latching means (12) can be released by actuating the spring-loaded tab (11) against a spring force.

5. Computer housing (1) according to any one of claims 1 to 4, wherein the inner region (15) covered by the second cover (4) has a shielding plate (17) for shielding components accommodated in the inner region (15) towards the outside.

6. Computer housing (1) according to claim 5, wherein the shielding plate (17) is fixed to the housing frame (2) by means of a releasable fastening means (18), wherein, when the second cover (4) is removed, the shielding plate (17) can be removed from the housing frame (2) by releasing the fastening means (18).

7. Computer housing (1) with a housing frame (2) and with a cover (4) which can be removed from the housing frame (2), wherein the cover (4) is part of an outer housing wall and in the assembled state covers an inner region (15) of the computer housing (1) towards the outside,
wherein the cover (4) has an operating mechanism (10) for releasing a latch of the cover (4) on the housing frame (2) and the cover (4) can be removed from the housing frame (2) when the latch is released,
**characterised in that**
a safety pin (14) is provided which connects the operating mechanism (10) to a part of the housing frame (2) which is fixed with respect to the cover (4) and thus locks the operating mechanism (10) against operation,
wherein the safety pin (14) is arranged in a releasable manner and the operating mechanism (10) is unlocked when the safety pin (14) is released.

8. Computer housing (1) according to claim 7, wherein the safety pin (14) in the mounted state dips through an opening (22) on the operating mechanism (10) into an opening (23) on the fixed part of the housing frame (2) and fixes the operating mechanism (10) to the fixed part of the housing frame (2).

9. Computer housing (1) according to claim 7 or 8, which is embodied as a computer housing (1) according to any one of claims 1 to 6, wherein the removable cover (4) is set up as the second cover (4) and the safety pin (14) is set up to lock the operating mechanism (10) of the second cover (4) against operation accordingly.

10. Computer housing (1) according to claim 9, wherein in the mounted state of the first and second cover (3, 4) the first cover (3) covers the safety pin (14), and
wherein, when the first cover (3) is removed, the security pin (14) can be released from the outside.

## Revendications

1. Boîtier d'ordinateur (1) avec un cadre de boîtier (2), avec un premier couvercle (3) et avec un deuxième couvercle (4), le premier et le deuxième couvercle (3, 4) étant des parties amovibles d'une paroi extérieure du boîtier par rapport au cadre de boîtier (2) et recouvrant chacun, à l'état monté, une zone intérieure (8, 15) du boîtier d'ordinateur (1) vers l'extérieur,
les premier et second couvercles (3, 4) ont chacun un mécanisme d'actionnement (6, 10) pour libérer un verrou des premier et second couvercles (3, 4), respectivement, sur le cadre de boîtier (2), et lorsque le verrou est libéré dans chaque cas, les premier et second couvercles (3, 4), respectivement, peuvent être retirés du cadre de boîtier (2), **caractérisé en ce que**
à l'état monté du premier et du second couvercle (3, 4), le premier couvercle (3) cache le mécanisme de fonctionnement (10) du second couvercle (4)
dans lequel, lorsque le premier couvercle (3) est retiré, le mécanisme d'actionnement (10) du second couvercle (4), qui est encore monté, peut être actionné depuis l'extérieur, de sorte que le verrou du second couvercle (4) peut être libéré et le second couvercle (4) peut être retiré du cadre de boîtier (2).

2. Boîtier d'ordinateur (1) selon la revendication 1, dans lequel le premier couvercle (3) peut être verrouillé sur le cadre du boîtier (2) à l'état monté par l'intermédiaire d'un verrou (7), de sorte que le premier couvercle (3) ne peut pas être retiré du cadre du boîtier (2) à l'état verrouillé.

3. Boîtier d'ordinateur (1) selon la revendication 1 ou 2, dans lequel le premier couvercle (3) peut pivoter pour être retiré par rapport au cadre du boîtier (2), tandis que le second couvercle (4) peut coulisser pour être retiré par rapport au cadre du boîtier (2).

4. Boîtier d'ordinateur (1) selon l'une quelconque des revendications 1 à 3, dans lequel le mécanisme d'actionnement (10) du deuxième couvercle (4) comprend une languette à ressort (11) et un moyen d'encliquetage (12), dans lequel la languette à ressort (11) s'enclenche sur le moyen d'encliquetage (12) à l'état monté du deuxième couvercle (4) et l'enclenchement de la languette à ressort (11) sur le moyen d'encliquetage (12) peut être libéré en actionnant la languette à ressort (11) contre une force de ressort.

5. Boîtier d'ordinateur (1) selon l'une quelconque des revendications 1 à 4, dans lequel la région intérieure (15) recouverte par le deuxième couvercle (4) comprend une plaque de blindage (17) pour protéger vers l'extérieur les composants logés dans la région intérieure (15).

6. Boîtier d'ordinateur (1) selon la revendication 5, dans lequel la plaque de blindage (17) est fixée au cadre du boîtier (2) au moyen d'un moyen de fixation détachable (18), dans lequel, lorsque le second couvercle (4) est retiré, la plaque de blindage (17) peut être retirée du cadre du boîtier (2) en libérant le moyen de fixation (18).

7. Boîtier d'ordinateur (1) avec un cadre de boîtier (2) et avec un couvercle (4) pouvant être retiré du cadre de boîtier (2), le couvercle (4) faisant partie d'une paroi extérieure du boîtier et recouvrant, à l'état monté, une zone intérieure (15) du boîtier d'ordinateur (1) vers l'extérieur,
dans lequel le couvercle (4) a un mécanisme de fonctionnement (10) pour libérer un verrou du couvercle (4) sur le cadre de logement (2) et, lorsque le verrou est libéré, le couvercle (4) peut être retiré du cadre de logement (2),
**caractérisé en ce que**
une goupille de sécurité (14) est prévue, qui relie le mécanisme de fonctionnement (10) à une partie du cadre du boîtier (2) qui est fixe par rapport au couvercle (4) et bloque ainsi le mécanisme de fonctionnement (10) contre tout fonctionnement,
dans lequel la goupille de sécurité (14) est disposée de manière détachable et le mécanisme de fonctionnement (10) est déverrouillé lorsque la goupille de sécurité (14) est détachée.

8. Boîtier d'ordinateur (1) selon la revendication 7, dans lequel la goupille de sécurité (14) à l'état assemblé plonge à travers une ouverture (22) sur le mécanisme de fonctionnement (10) dans une ouverture (23) sur la partie fixe du cadre du boîtier (2) et fixe le mécanisme de fonctionnement (10) à la partie fixe du cadre du boîtier (2).

9. Boîtier d'ordinateur (1) selon la revendication 7 ou 8, qui est réalisé comme un boîtier d'ordinateur (1) selon l'une quelconque des revendications 1 à 6, dans lequel le couvercle amovible (4) est disposé comme le deuxième couvercle (4) et la goupille de sécurité (14) est disposée pour verrouiller le mécanisme de fonctionnement (10) du deuxième couvercle (4) contre le fonctionnement en conséquence.

10. Boîtier d'ordinateur (1) selon la revendication 9, dans lequel, à l'état assemblé des premier et deuxième couvercles (3, 4), le premier couvercle (3) cache la goupille de sécurité (14), et
dans lequel, lorsque le premier couvercle (3) est retiré, la goupille de sécurité (14) peut être détachée de l'extérieur.
